# FASCICULE DE BREVET EUROPEEN

(11) **EP 1 123 848 B1**
(45) Date de publication et mention de la délivrance du brevet: **20.12.2006**
(21) Numéro de dépôt: 01400317.2
(22) Date de dépôt: 08.02.2001
(51) Int. Cl.: B60T 13/52, B60T 8/00, B60T 13/66

(54) **Dispositif de freinage à sensation pédale améliorée et procédé associé**
Bremsvorrichtung mit verbessertem Pedalgefühl und damit verbundenes Verfahren
Brake device with improved pedal feeling and connected method

(30) Priorité: 10.02.2000 FR 0001636
(43) Date de publication de la demande: 16.08.2001
(73) Titulaire: Peugeot Citroen Automobiles SA, 92200 Neuilly sur Seine (FR)
(72) Inventeur: Ozanne, Matthieu, 75005 Paris (FR)
(74) Mandataire: Bentz, Jean-Paul

(56) Documents cités:
- EP-A- 0 663 327
- PATENT ABSTRACTS OF JAPAN vol. 017, no. 324 (M-1433), 21 juin 1993 (1993-06-21) & JP 05 039013 A (MITSUBISHI MOTORS CORP), 19 février 1993 (1993-02-19)

## Description

La présente invention concerne, selon l'un de ses aspects, un dispositif de freinage tel que ceux qui sont couramment installés sur les véhicules automobiles, en particulier sur les véhicules animés par un moteur diesel.

Plus précisément, l'invention concerne notamment un dispositif de freinage pour un véhicule à moteur équipé d'un capteur de vitesse, ce dispositif comprenant au moins un frein, une pédale de frein, un transmetteur de force de freinage constitué par un maître-cylindre hydraulique et sélectivement commandé par actionnement de la pédale, un amplificateur de freinage à dépression pour développer et appliquer une force d'assistance au transmetteur lorsque la pédale est actionnée, une pompe à vide pour fournir à une première chambre de l'amplificateur de freinage une atmosphère raréfiée présentant une pression réduite susceptible de descendre jusqu'à un seuil minimal déterminé, et un indicateur de freinage adoptant sélectivement un état actif ou un état passif selon que la pédale est ou non actionnée.

Un dispositif de freinage de ce type est par exemple décrit dans les documents de brevets JP 05 039013 et EP 0663 327.

Alors que les véhicules automobiles animés par un moteur à essence utilisent généralement des amplificateurs de freinage à dépression encore appelés "servomoteurs" dont l'entrée d'aspiration est reliée à un tube à dépression installé sur l'entrée d'admission du moteur, les véhicules automobiles animés par un moteur diesel sont couramment équipés d'une pompe à vide servant notamment à fournir la dépression nécessaire au fonctionnement de l'amplificateur.

Or, dans la mesure où les pompes à vide présentent un débit maximum inférieur à celui que peut produire un moteur à essence, il peut arriver, dans certaines conditions, qu'un actionnement inconsidéré du frein par le conducteur du véhicule induise, pour l'amplificateur, une consommation d'air à pression réduite qui sature la pompe à vide.

Dans de telles situations, le rétablissement de la basse pression dans l'amplificateur, qui succède à une telle phase de saturation, provoque une augmentation de la force d'assistance, ce qui produit à son tour un enfoncement de la pédale de frein, même si la force que lui applique le conducteur reste sensiblement constante.

Or, non seulement la sensation que procure au conducteur l'enfoncement de la pédale de frein dans ces circonstances peut être très désagréable, mais elle peut aussi, chez un conducteur inexpérimenté, être source de réaction d'anxiété.

L'invention se situe dans ce contexte et a pour but de proposer un dispositif de freinage, obtenu par modification aussi minime que possible d'un dispositif connu, et dans lequel l'enfoncement intempestif de la pédale de frein dans les conditions précédemment décrites peut être réduit au point de ne plus être perceptible ni gênant.

A cette fin, le dispositif de l'invention, par ailleurs conforme à la définition générique qu'en donne le préambule ci-dessus, est essentiellement caractérisé en ce qu'il inclut le capteur de vitesse du véhicule, en ce qu'il comprend en outre des moyens de contrôle de pression pour limiter la pression de l'atmosphère raréfiée à une valeur limite supérieure au seuil minimal lorsque la vitesse du véhicule est inférieure ou égale à une vitesse limite déterminée, alors que l'indicateur de freinage est dans son état actif, et en ce que les moyens de contrôle de pression comprennent un clapet taré faisant sélectivement communiquer la première chambre de l'amplificateur de freinage avec un volume à pression atmosphérique, et une électrovalve montée en série avec le clapet taré entre la première chambre de l'amplificateur et le volume à pression atmosphérique.

Dans le cas classique où un clapet anti-retour est monté sur la première chambre de l'amplificateur, ce clapet anti-retour est avantageusement monté en série avec l'électrovalve et le clapet taré, et sépare la première chambre de l'amplificateur de l'électrovalve et du clapet taré.

Dans ce cas, l'entrée d'aspiration de la pompe est de préférence branchée entre le clapet anti-retour et le clapet taré.

Selon un mode de réalisation efficace de l'invention, les moyens de contrôle de pression comprennent une unité logique commandant sélectivement l'électrovalve en fonction d'un signal de vitesse produit par le capteur de vitesse, et d'un signal logique d'état représentatif d'un actionnement de la pédale, et produit par l'indicateur de freinage.

Par ailleurs, la valeur limite Plim peut être choisie comme étant de l'ordre de 300 millibars, et la vitesse limite Vlim de l'ordre de 5 kilomètres / heure.

L'invention concerne également un procédé de contrôle d'un amplificateur de freinage à dépression, équipant un véhicule et alimenté en dépression par une pompe à vide, ce procédé étant essentiellement caractérisé en ce qu'il comprend les opérations consistant à mesurer ou estimer une vitesse de déplacement du véhicule, à détecter un actionnement de l'amplificateur, et à limiter la dépression fournie à l'amplificateur lorsque la vitesse du véhicule est inférieure ou égale à une limite déterminée, alors que l'amplificateur est actionné.

D'autres caractéristiques et avantages de l'invention ressortiront clairement de la description qui en est faite ci-après, à titre indicatif et nullement limitatif, en référence aux dessins annexés, dans lesquels :
- La figure 1 est un schéma représentant un dispositif de freinage conforme à l'invention;
- La figure 2 est un diagramme représentant l'évolution, en fonction du temps T, de la pression P régnant dans la première chambre de l'amplificateur d'un dispositif de freinage de l'art antérieur, ou d'un dispositif de freinage conforme à l'invention, dans certaines conditions de fonctionnement; et
- La figure 3 est un diagramme représentant l'évolution, en fonction du temps T, de la pression P régnant dans la première chambre de l'amplificateur d'un dispositif de freinage conforme à l'invention, dans certaines conditions de fonctionnement différentes de celles de la figure 2.

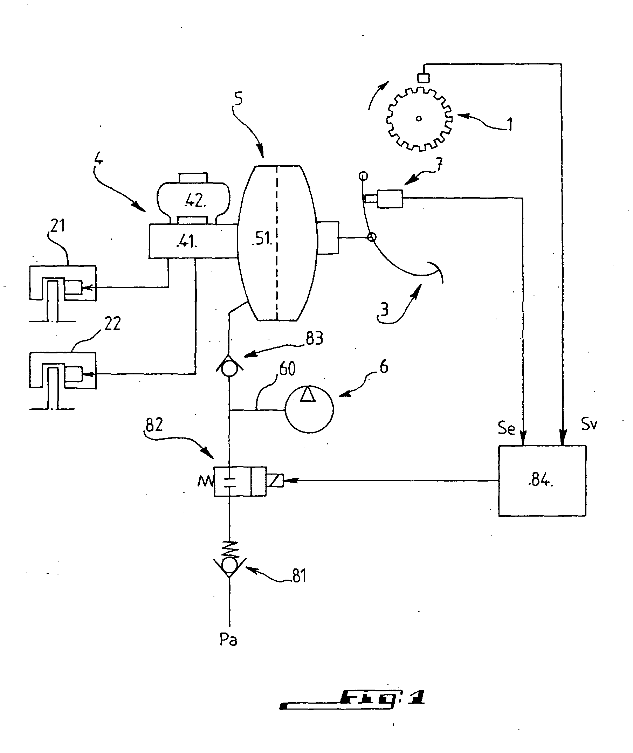

Comme le montre la figure 1, l'invention concerne un dispositif de freinage destiné à équiper un véhicule à moteur doté d'un capteur de vitesse 1, ce dispositif comprenant essentiellement, de façon classique, des freins tels que des freins à disques 21 et 22, une pédale de frein 3, un transmetteur de force de freinage par exemple constitué par un maître-cylindre 4, un amplificateur de freinage à dépression 5 encore appelé "servomoteur", une pompe à vide 6, et un indicateur de freinage 7, tel qu'un contacteur électrique de feux de ralentissement, encore appelés "feux stop".

Le maître-cylindre 4 comprend par exemple un corps 41 alimenté en fluide de freinage par un réservoir 42.

Suivant un montage lui-même bien connu, l'amplificateur 5 peut être accolé au corps 41 du maître-cylindre 4, de sorte que la pédale 3, lorsqu'elle est actionnée, actionne directement le maître-cylindre en même temps qu'elle commande l'amplificateur.

Dans ces conditions, l'amplificateur 5 développe une force d'assistance qui est transmise au maître-cylindre 4 et qui s'ajoute à la force de freinage exercée par le conducteur sur la pédale 3, le maître-cylindre recevant donc une force résultante, voisine de la somme des forces de freinage et d'assistance.

Le maître-cylindre 4 transforme cette force résultante en une élévation de pression du fluide hydraulique de freinage, qui est utilisée pour actionner les freins 21 et 22.

La force d'assistance exercée par l'amplificateur 5 est elle-même obtenue par une différence de pression pneumatique entre plusieurs chambres de cet amplificateur, et dont une première au moins, référencée 51, est à une pression inférieure à celle qui règne dans une seconde chambre de cet amplificateur.

Dans le cas, qui correspond à l'application privilégiée de l'invention, où l'amplificateur 5 est un amplificateur à dépression, la première chambre 51 est reliée à la pompe à vide 6 pour pouvoir en permanence être remplie d'une atmosphère raréfiée, c'est-à-dire d'une masse d'air dont la pression P soit inférieure à la pression Pa de l'atmosphère ambiante.

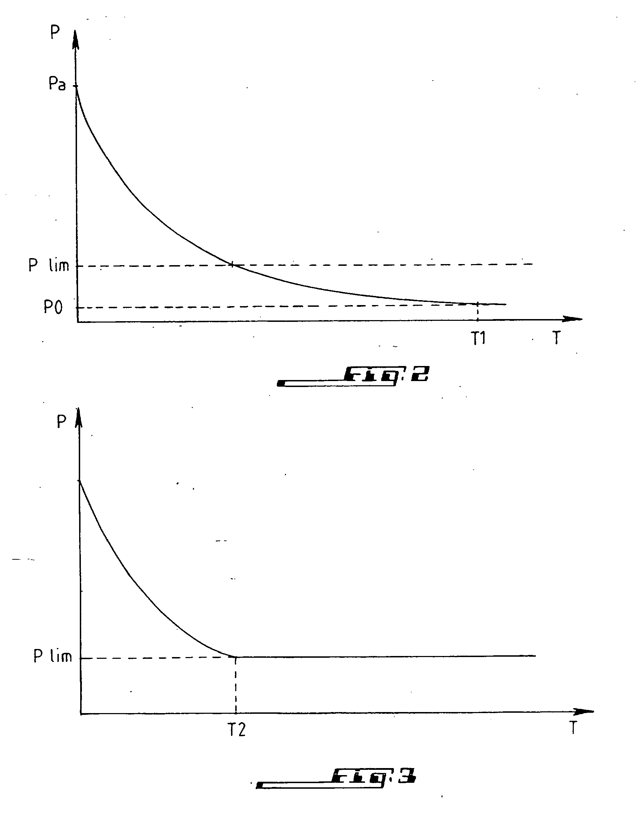

Ainsi, si la première chambre 51 de l'amplificateur 5 est initialement à la pression atmosphérique Pa, la mise en marche de la pompe 6 réduit la pression P dans la chambre 51 d'une façon qui dépend du temps T écoulé depuis cette mise en marche, l'évolution de la pression P en fonction du temps T étant illustrée sur la figure 2.

Comme le montre cette figure, la pression P régnant dans la chambre 51 peut évoluer jusqu'à un seuil minimal de pression P0 qui dépend des performances de la pompe 6, mais qui est généralement de l'ordre de 100 millibars, la pression P étant ainsi inférieure de 900 millibars à la pression atmosphérique Pa.

L'indicateur de freinage 7 est conçu pour adopter un état actif ou un état passif selon que la pédale 3 est ou non actionnée, et peut donc être considéré comme un organe logique propre à produire un signal d'état Se représentatif de la présence ou de l'absence d'un actionnement de la pédale 3.

Enfin, le capteur de vitesse 1 peut lui-même être constitué, de façon connue en soi, par un capteur de rotation de roue tel que ceux qui sont utilisés dans les systèmes de freinage dotés d'une fonction anti-blocage de roues (ABS) ou d'une fonction contrôle dynamique de châssis (CDC), un tel capteur délivrant un signal de vitesse Sv dont la fréquence est représentatif de la vitesse V du véhicule.

Le dispositif de freinage selon l'invention comprend en outre des moyens pour limiter, dans certaines circonstances, la pression P régnant dans la chambre de l'atmosphère raréfiée à une valeur limite Plim supérieure au seuil minimal P0 qu'elle peut normalement atteindre.

Plus précisément, ces moyens de contrôle de pression sont conçus pour limiter la pression P dans la chambre 51 à cette valeur limite Plim lorsque la vitesse V du véhicule est inférieure ou égale à une vitesse limite déterminée Vlim, alors que l'amplificateur est sollicité par actionnement de la pédale, c'est-à-dire alors que l'indicateur de freinage 7 se trouve dans son état actif. Par exemple, la valeur limite Plim de la pression P dans la chambre 51 peut être de l'ordre de 300 millibars, la pression P étant ainsi inférieure de 700 millibars à la pression atmosphérique Pa, et la vitesse limite Vlim pouvant, quant à elle, être de l'ordre de 5 kilomètres / heure.

A cette fin, les moyens de contrôle de pression comprennent essentiellement, comme le montre la figure 1, un clapet taré 81 et une électrovalve 82, le clapet taré 81 faisant communiquer la première chambre 51 de l'amplificateur 5 avec l'atmosphère ambiante ou avec tout autre volume à pression atmosphérique Pa, et l'électrovalve 82 étant montée en série avec le clapet taré 81 entre la chambre 51 et l'atmosphère ambiante Pa pour pouvoir contrôler la communication établie par le clapet taré 81.

Cet agencement autorise à conserver le clapet anti-retour 83 généralement déjà prévu sur les systèmes existants, ce clapet anti-retour 83 étant alors monté en série avec l'électrovalve 82 et le clapet taré 81 de manière à se trouver entre, d'une part, la première chambre 51 de l'amplificateur 5 et, d'autre part, l'électrovalve 82 et le clapet taré 81, l'entrée d'aspiration 60 de la pompe 6 étant elle-même branchée entre le clapet anti-retour 83 et le clapet taré 81.

Le contrôle de l'électrovalve 82 est par exemple assuré par une unité logique 84 qui est reliée au capteur de vitesse 1 et à l'indicateur de freinage 7, et qui commande l'ouverture ou la fermeture de l'électrovalve 82 en fonction du signal de vitesse Sv et du signal logique d'état Se qu'elle reçoit.

Comme le montre la figure 3, l'invention propose donc, lorsque la vitesse V du véhicule est inférieure ou égale à une vitesse limite Vlim de l'ordre de 5 km / h alors que l'amplificateur 5 est actionné, de limiter la descente de la pression P régnant dans la chambre 51 de l'amplificateur 5 à une valeur Plim de l'ordre de 300 millibars, au lieu de laisser cette pression P continuer à descendre jusqu'à son seuil minimal, de l'ordre de 100 millibars.

Grâce à l'invention, la pression P dans la chambre 51 se trouve stabilisée au bout d'un temps T2 relativement court, comparé au temps T1 relativement long au bout duquel la pression P cesse d'évoluer de façon significative dans l'art antérieur, l'invention permettant ainsi de supprimer la sensation désagréable provoquée par l'enfoncement de la pédale de frein 3, dans les conditions où la limitation de la pression à sa valeur relativement haute Plim est dépourvue de toute conséquence négative sur la sécurité du freinage.

Comme le comprendra aisément l'homme de l'art à la lecture de la description qui précède et à l'examen des figures annexées, l'invention serait applicable, de façon équivalente, à un dispositif de freinage utilisant un amplificateur à surpression au lieu d'un amplificateur à dépression, sous réserve d'inverser le sens de passage du clapet taré 81, d'inverser le sens de passage du clapet anti-retour 83, et de relier la chambre de haute pression de l'amplificateur 5 à la sortie de refoulement d'une pompe pneumatique telle que 6, utilisée comme pompe haute pression.

## Revendications

1. Dispositif de freinage pour un véhicule à moteur équipé d'un capteur de vitesse (1), ce dispositif comprenant au moins un frein (21, 22), une pédale de frein (3), un transmetteur (4) de force de freinage constitué par un maître-cylindre hydraulique et sélectivement commandé par actionnement de la pédale (3), un amplificateur de freinage à dépression (5) pour développer et appliquer une force d'assistance au transmetteur (4) lorsque la pédale (3) est actionnée, une pompe à vide (6) pour fournir à une première chambre (51) de l'amplificateur (5) une atmosphère raréfiée présentant une pression réduite (P) susceptible de descendre jusqu'à un seuil minimal déterminé (P0), et un indicateur de freinage (7) adoptant sélectivement un état actif ou un état passif selon que la pédale (3) est ou non actionnée, **caractérisé en ce qu'**il inclut le capteur de vitesse (1), **en ce qu'**il comprend en outre des moyens de contrôle de pression (81 à 84) pour limiter la pression de l'atmosphère raréfiée à une valeur limite (Plim) supérieure au seuil minimal (P0) lorsque la vitesse (V) du véhicule est inférieure ou égale à une vitesse limite déterminée (Vlim), alors que l'indicateur de freinage (7) est dans son état actif, et **en ce que** les moyens de contrôle de pression (81 à 84) comprennent un clapet taré (81) faisant sélectivement communiquer la première chambre (51) de l'amplificateur (5) avec un volume à pression atmosphérique (Pa), et une électrovalve (82) montée en série avec le clapet taré (81) entre la première chambre (51) de l'amplificateur (5) et le volume à pression atmosphérique (Pa).

2. Dispositif de freinage suivant la revendication 1, **caractérisé en ce que** les moyens de contrôle de pression (81 à 84) comprennent un clapet anti-retour (83) monté en série avec l'électrovalve (82) et le clapet taré (81) et séparant la première chambre (51) de l'amplificateur (5) de l'électrovalve (82) et du clapet taré (81).

3. Dispositif de freinage suivant la revendication 2, **caractérisé en ce que** la pompe (6) présente une entrée d'aspiration (60) branchée entre le clapet anti-retour (83) et le clapet taré (81).

4. Dispositif de freinage suivant l'une quelconque des revendications précédentes, **caractérisé en ce que** le capteur de vitesse (1) est conçu pour produire un signal de vitesse (Sv), **en ce que** l'indicateur de freinage (7) est conçu pour produire un signal logique d'état (Se) représentatif d'un actionnement de la pédale (3), et **en ce que** les moyens de contrôle de pression (81 à 84) comprennent une unité logique (84) commandant sélectivement l'électrovalve (82) en fonction du signal de vitesse (Sv) et du signal logique d'état (Se).

5. Dispositif de freinage suivant l'une quelconque des revendications précédentes, **caractérisé en ce que** la valeur limite (Plim) est de l'ordre de 300 millibars.

6. Dispositif de freinage suivant l'une quelconque des revendications précédentes, **caractérisé en ce que** la vitesse limite (Vlim) est de l'ordre de 5 kilomètres / heure.

7. Procédé de contrôle d'un amplificateur de freinage à dépression (5), équipant un véhicule et alimenté en dépression par une pompe à vide- (6), **caractérisé en ce qu'**il comprend les opérations consistant à mesurer ou estimer une vitesse (V) de déplacement du véhicule, à détecter un actionnement de l'amplificateur (5), et à limiter la dépression fournie à l'amplificateur lorsque la vitesse (V) du véhicule est inférieure ou égale à une limite déterminée (Vlim), alors que l'amplificateur (5) est actionné.

## Claims

1. A braking device for a motor vehicle fitted with a speed sensor (1), this device comprising at least one brake (21, 22), a brake pedal (3), a braking force transmitter (4) consisting of a hydraulic master cylinder and selectively controlled by actuating the pedal (3), a vacuum-assisted brake booster (5) for developing and applying an auxiliary force to the transmitter (4) when the pedal (3) is actuated, a vacuum pump (6) for providing a first chamber (51) of the booster (5) with a rarefied atmosphere having reduced pressure (P) capable of being lowered down to a determined minimum threshold (P0), and a brake indicator (7) selectively adopting an active state or a passive state according to whether the pedal (3) is actuated or not, **characterized in that** it includes the speed sensor (1), **in that** it further comprises means for controlling pressure (81-84) in order to limit the pressure of the rarefied atmosphere to a limiting value (Plim) above the minimum threshold (P0) when the speed (V) of the vehicle is less than or equal to a determined limiting speed (Vlim), while the braking indicator (7) is in its active state, and **in that** the pressure controlling means (81-84) comprise a tared valve (81) selectively causing the first chamber (51) of the booster (5) to communicate with a space at atmospheric pressure (Pa), and a solenoid valve (82) mounted in series with the tared valve (81) between the first chamber (51) of the booster (5) and the space at atmospheric pressure (Pa).

2. The braking device according to claim 1, **characterized in that** the pressure controlling means (81-84) comprise a non-return valve (83) mounted in series with the solenoid valve (82) and the tared valve (81) and separating the first chamber (51) of the booster (5) from the solenoid valve (82) and the tared valve (81).

3. The braking device according to claim 2, **characterized in that** the pump (6) has a suction inlet (60) connected between the non-return valve (83) and the tared valve (81).

4. The braking device according to any of the preceding claims, **characterized in that** the speed sensor (1) is designed to produce a speed signal (Sv), **in that** the braking indicator (7) is designed to produce a state logic signal (Se) representative of actuation of the pedal (3), and **in that** the pressure controlling means (81-84) comprise a logic unit (84) selectively controlling the solenoid valve (82) according to the speed signal (Sv) and to the state logic signal (Se).

5. The braking device according to any of the preceding claims, **characterized in that** the limiting value (Plim) is of the order of 300 millibars.

6. The braking device according to any of the preceding claims, **characterized in that** the limiting speed (Vlim) is of the order of 5 kilometers per hour.

7. A method for controlling a vacuum-assisted brake booster (5), fitted to a vehicle and supplied with vacuum by a vacuum pump (6), **characterized in that** it comprises operations consisting of measuring or estimating a displacement speed (V) of the vehicle, detecting actuation of the booster (5) and limiting the vacuum provided to the booster when the speed (V) of the vehicle is less than or equal to a determined limit (Vlim), while the booster (5) is actuated.

## Patentansprüche

1. Bremsvorrichtung für ein Motorfahrzeug, mit einem Geschwindigkeitssensor (1) ausgestattet, wobei diese Vorrichtung mindestens eine Bremse (21, 22), ein Bremspedal (3), einen Überträger (4) der Bremskraft, gebildet von einem Hydraulik-Hauptzylinder und wahlweise gesteuert durch Betätigen des Pedals (3), einem Unterdruck-Bremskraftverstärker (5), um eine Hilfskraft gegenüber dem Überträger (4) zu entwickeln und an diesen anzulegen, wenn das Pedal (3) betätigt wird, eine Vakuumpumpe (6), um einer ersten Kammer (51) des Verstärkers (5) eine verdünnte Atmosphäre mit einem reduzierten Druck (P) bereitzustellen, der bis auf eine bestimmte minimale Stufe (P0) abfallen kann, und eine Bremsanzeige (7), die wahlweise einen aktiven Zustand oder einen passiven Zustand annehmen kann, je nachdem, ob das Pedal (3) betätigt wird oder nicht, umfasst, **dadurch gekennzeichnet, dass** sie den Geschwindigkeitssensor (1) einschließt, **dadurch**, dass sie weiterhin Mittel zur Steuerung des Drucks (81 bis 84) umfasst, um den Druck der verdünnten Atmosphäre auf einen Grenzwert (Plim) zu begrenzen, der über der minimalen Stufe (P0) liegt, wenn die Geschwindigkeit (V) des Fahrzeugs kleiner als eine bestimmte Grenzgeschwindigkeit (Vlim) ist oder dieser entspricht, wenn sich die Bremsanzeige (7) in ihrem aktiven Zustand befindet, und **dadurch**, dass die Mittel zur Steuerung des Drucks (81 bis 84) ein kalibriertes Ventil (81) umfassen, das die erste Kammer (51) des Verstärkers (5) mit einem Volumen unter atmosphärischem Druck (Pa) wahlweise in Verbindung bringt, und ein Elektroventil (82), das mit dem kalibrierten Ventil (81) zwischen der ersten Kammer (51) des Verstärkers (5) und dem Volumen unter atmosphärischem Druck (Pa) in Reihe montiert ist.

2. Bremsvorrichtung nach Anspruch 1, **dadurch gekennzeichnet, dass** die Mittel zur Steuerung des Drucks (81 bis 84) ein Rückschlagventil (83) umfassen, das mit dem Elektroventil (82) und dem kalibrierten Ventil (81) in Reihe montiert ist und die erste Kammer (51) des Verstärkers (5) vom Elektroventil (82) und vom kalibrierten Ventil (81) trennt.

3. Bremsvorrichtung nach Anspruch 2, **dadurch gekennzeichnet, dass** die Pumpe (6) einen zwischen dem Rückschlagventil (83) und dem kalibrierten Ventil (81) angeschlossenen Ansaugeinlass (60) aufweist.

4. Bremsvorrichtung nach einem der vorangehenden Ansprüche, **dadurch gekennzeichnet, dass** der Geschwindigkeitssensor (1) konstruiert ist, um ein Geschwindigkeitssignal (Sv) zu erzeugen, **dadurch**, dass die Bremsanzeige (7) konstruiert ist, um ein logisches Zustandssignal (Se) zu erzeugen, das für eine Betätigung des Pedals (3) repräsentativ ist, und **dadurch**, dass die Mittel zur Steuerung des Drucks (81 bis 84) eine logische Einheit (84) umfassen, die wahlweise das Elektroventil (82) in Abhängigkeit des Geschwindigkeitssignals (Sv) und des logischen Zustandssignals (Se) steuern.

5. Bremsvorrichtung nach einem der vorangehenden Ansprüche, **dadurch gekennzeichnet, dass** der Grenzwert (Plim) zirka 300 Millibar beträgt.

6. Bremsvorrichtung nach einem der vorangehenden Ansprüche, **dadurch gekennzeichnet, dass** die Grenzgeschwindigkeit (Vlim) zirka 5 Kilometer pro Stunde beträgt.

7. Verfahren zur Steuerung eines Unterdruck-Bremskraftverstärkers (5), der ein Fahrzeug ausrüstet und von einer Vakuumpumpe (6) mit Unterdruck versorgt wird, **dadurch gekennzeichnet, dass** er Vorgänge umfasst, die darin bestehen, eine Geschwindigkeit (V) der Ortsveränderung des Fahrzeugs zu messen oder zu schätzen, eine Betätigung des Verstärkers (5) festzustellen und den Unterdruck, der dem Verstärker bereitgestellt wird, wenn die Geschwindigkeit (V) des Fahrzeugs unter einer bestimmten Grenzgeschwindigkeit (Vlim) liegt oder dieser entspricht, zu begrenzen, wenn der Verstärker (5) betätigt wird.
